Europäisches Patentamt

European Patent Office

Office européen des brevets

(19)

(11) Publication number: 0 370 820
A2

(12) **EUROPEAN PATENT APPLICATION**

(21) Application number: 89312199.6

(22) Date of filing: 23.11.89

(51) Int. Cl.⁵: C08L 23/04, C08J 5/18,
B65D 1/00, //(C08L23/04,
67:02)

(30) Priority: 25.11.88 JP 297923/88

(43) Date of publication of application:
30.05.90 Bulletin 90/22

(84) Designated Contracting States:
AT BE CH DE ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Nedzu, Shigeru
324 Miyashita
Fuji-shi Shizuoka(JP)
Inventor: Ito, Haruyasu
885-11, Miyajima
Fuji-shi Shizuoka(JP)

(74) Representative: Jackson, Peter et al
HYDE, HEIDE & O'DONNELL 146 Buckingham
Palace Road
London SW1W 9TR(GB)

(54) **Bag with resistance to thermal adhesion.**

(57) A heavy-duty bag with excellent resistance to thermal adhesion ("blocking") is formed from a sheet prepared from a polymer composition composed of a polyethylene resin and 5 to 30% by weight (based on the polymer composition) of a polybutylene terephalate resin having an intrinsic viscosity of 0.7 or more.

EP 0 370 820 A2

## BAG WITH RESISTANCE TO THERMAL ADHESION

The present invention relates to a synthetic resin bag having excellent resistance to thermal adhesion.

At the present time, bags which are to contain fertilizers, feed, chemicals, etc., i.e., the so-called "heavy-duty" (or "heavy-load") bags, are mainly made of a polyethylene resin. This material has the advantage of being strong but inexpensive. Also from the viewpoint of economy, the bags are formed from a tubular film prepared by inflation molding.

However, when heavy-duty bags made of a polyethylene resin are filled with contents at a high temperature (about 80 to 100°C) and put on top of each other, there occurs thermal adhesion between bags, i.e., "blocking", which not only makes for difficulties in handling, but also brings about a possibility of splitting or breaking of the bags. For this reason, in general, the contents are cooled below about 60°C before filling the bags or the filled bags are cooled before being stacked on a pallet.

Examples of thermoplastic resins known to have excellent heat resistance include various kinds of resins such as polyethylene terephthalate resins, polyamide resins, polyphenylene sulfide resins, and polycarbonate resins. However, these resins have not been put to a practical use for reasons such as high cost, difficulty of forming a film by inflation molding, and poor productivity of the step of forming the bag. Although blending of the heat-resistant resin with a polyethylene resin is also considered as an expedient, this method has not been put to practical use because mechanical and thermal properties greatly vary depending upon the dispersion and kneading conditions.

The present invention has been made in view of the above-described problems, and an object of the present invention is to provide a bag having excellent resistance to thermal adhesion which can be filled with high temperature material.

The present inventors have made extensive and intensive studies with a view to attaining the above-described object and, as a result, have found that the resistance to thermal adhesion can be increased by 10 to 30°C when use is made of a bag having an external layer comprising a film prepared by kneading about 5 to 30% by weight (based on the total weight of a composition) of a particular polybutylene terephthalate resin with a particular polyethylene resin followed by extrusion, which has led to the completion of the present invention.

The term "resistance to thermal adhesion" (also known as "blocking resistance") used herein is intended to mean a value obtained by measurement according to JIS Z 1514, items 6.7.

Accordingly, the present invention provides a heavy duty bag formed from a sheet comprising at least one layer of polymer material characterized in that the sheet comprises an external layer formed from a polymer composition composed of a polyethylene resin and 5 to 30% by weight (based on the polymer composition) of a polybutylene terephalate resin having an intrinsic viscosity of 0.7 or more.

A heavy-duty bag according to the invention has excellent resistance to thermal adhesion, even if formed as a single layer structure of the said polymer composition.

In the present invention, there is no particular limitation on the polyethylene resin to be used in the form of a mixture with the polybutylene terephthalate resin, and any polyethylene resin usually employed in forming this kind of bag may be used. Example of the polyethylene resin include low-density polyethylene resins (LPDE), linear low-density polyethylene resins (L-LPDE), and copolymers thereof. They may be used either alone or in any combination thereof. L-LPDE is particularly preferable. The melt index of the polyethylene resin is preferably 0.1 to 5.0.

The above-described polybutylene terephthalate resin used in the present invention is one formed by polycondensation of 1,4-butanediol with terephthalic acid or an ester thereof with a lower alcohol and may be a copolymer mainly composed of polybutylene terephthalate. In the present invention, it is necessary to use polybutylene terephthalate having an intrinsic viscosity of 0.7 or more from the viewpoint of preparing a film by inflation. Use of a polybutylene terephthalate resin having an intrinsic viscosity of 1.0 or more is preferred.

The present invention is characterized by using, as an external layer of a bag, a film prepared from a resin composition composed of the above-described polyethylene resin and, incorporated therein, 5 to 30% by weight (based on the total weight of the composition) of a polybutylene terephthalate resin. When the polybutylene terephthalate resin content of the layer is less than 5% by weight, the blocking resistance can be hardly improved. On the other hand, when the content exceeds 30% by weight, the dispersion of the polybutylene terephthalate resin becomes poor. This unfavorably brings about not only a lowering in the physical properties and film forming properties but also a lowering in the adhesion between the internal layer and the external layer.

The polyethylene resin may be previously blended with the polybutylene terephthalate resin in another

2

extruder, or alternatively blended in a film molding extruder. However, since physical properties are lowered when the dispersion of the polybutylene terephthalate resin is poor, it is preferable to conduct blending previously in another extruder.

Although it is possible to form a bag having the desired resistance to thermal adhesion from a single layer having the above-described constitution, the bag is liable to be slightly short of physical properties such as tear strength required in some applications.

Accordingly, the present inventors have further conducted studies and found that use of a laminated sheet comprising the above-described layer and a polyolefin layer laminated on the inside thereof enables formation of a bag having a combination of excellent mechanical strength and resistance to thermal adhesion.

Thus in a preferred embodiment of the invention there is provided a heavy-duty bag characterized by being formed from a sheet prepared by molding and laminating a polyolefin resin by co-extrusion inflation molding on the inside of a layer prepared from a polymer composition composed of a polyethylene resin and added thereto 5 to 30% by weight (based on the resin composition) of a polybutylene terephthalate resin having an intrinsic viscosity of 0.7 or more.

In the said embodiment of the instant application, although the kind of the polyethylene resin used of a mixture with the polybutylene terephthalate resin is substantially the same as that used in a single layer structure, the melt index of the polyethylene resin may be as wide as from 0.1 to 15. When the melt index is less than 0.1, the motor load of the extruder during formation of a film becomes large because the viscosity is high, which lowers the productivity. On the other hand, when the melt index exceeds 15, the viscosity is so low that not only the productivity is lowered but also it is impossible to prepare a homogeneous coextruded film. The melt index is preferably 0.1 to 5.0.

Examples of the polyolefin resin used for the internal layer in the present invention include homopolymers of olefins, such as ethylene, propylene, butene, isoprene, pentene and methylpentene, and their copolymers having a melt index of 0.1 to 5.0. Polyethylene and its copolymers are particularly preferred. When the melt index is less than 0.1, the motor load of the extruder during formation of a film becomes large because the viscosity is high, which lowers the productivity. On the other hand, when the melt index exceeds 5.0, the viscosity is low, which not only makes the film formation difficult but also brings about an unfavorable lowering in the mechanical properties, particularly tensile elongation of the molded film.

It is impossible to successfully laminate the polyolefin internal layer on the polybutylene terephthalate-containing polyethylene resin external layer through thermal adhesion. Also bonding the layers with an adhesive often brings about peeling during use. For these reasons, it is preferred to form a bag from a film having a two-layer structure prepared by co-extrusion inflation through the use of polyolefin resin as an internal layer and a polyethylene resin composition containing 5 to 30% by weight (based on the total weight of the composition) of polybutylene terephthalate resin as an external layer. Thus, it is possible to form a bag having a resistance to thermal adhesion increased by about 5 to 30°C, sufficient adhesive strength without use of any adhesive, and strength necessary for a heavy-duty bag, particularly tensile elongation and tear strength in the direction perpendicular to that of extrusion of the film, comparable to those of a polyethylene resin.

In the case of the two-layer structure, the external layer is preferably as thin as possible since it is used for the purpose of improving the resistance to thermal adhesion, while the internal layer has a thickness sufficient to provide the mechanical strength necessary for a bag. The total thickness of the sheet is preferably 50 to 500 $\mu$m, most preferably 60 to 300 $\mu$m.

The thickness ratio of the internal layer to the external layer is preferably 95/5 to 30/70.

In the case of a resin composition comprising a polyethylene resin having a melt index of 0.1 to 15 and added thereto 5 to 30% by weight (based on the total weight of the composition) of a polybutylene terephthalate resin having an intrinsic viscosity of 0.7 or more, it is preferred that the viscosity ratio of the polybutylene terephthalate resin to the polyethylene resin be in a range represented by the following formula:

viscosity ratio $\eta_A/\eta_B$ = 0.15 to 2.5

wherein $\eta_A$: viscosity of polybutylene terephthalate resin as determined at a shear rate of 100 sec$^{-1}$ at 240°C,

$\eta_B$: viscosity of polyethylene resin as determined at a shear rate of 100 sec$^{-1}$ at 240°C.

When the viscosity ratio, $\eta_A/\eta_B$, is less than 0.15 or exceeds 2.5, poor dispersion of the resin occurs.

In the polymer material used in the present invention, known substances used as additives for thermoplastic and thermosetting resins, i.e., plasticizers, stabilizers such as antioxidants and ultraviolet absorbers, antistatic agents, surfactants, colorants such as dyes and pigments, lubricating agents for the purpose of improving flowability, crystallization accelerators (nucleating agents), etc., may be also added

EP 0 370 820 A2

depending upon the intended performance. It is also possible to add as auxiliaries small amounts of other thermoplastic resins and inorganic fillers depending upon the required duty as far as they do not hinder the effect of the present invention.

The bag of the invention is formed of a composition comprising 5 to 30 wt.% of polybutylene terephthalate having an intrinsic viscosity of 0.7 or move and 70 to 95 wt.% of polyethylene.

The bag of the present invention is improved in resistance to thermal adhesion without detriment to mechanical strength necessary for a bag, e.g., tensile strength, tensile elongation and tear strength. The increase in the resistance to thermal adhesion enables a reduction in the cooling time of contents for filling and thus provides an improvement in working efficiency.

[Examples]

The present invention will now be described in more detail with reference to the following Examples which should not be construed as limiting the scope of the present invention.

Examples 1 to 8 and Comparative Examples 1 to 6.

Polymer films shown in Table 1 were prepared by the following method and subjected to evaluation of the physical properties.

A linear low-density polyethylene resin having a melt index of 0.5 (Ultzex 2005; a product of Mitsui Petrochemical Industries, Ltd.) used in a heavy-duty bag in the art was kneaded with a polybutylene terephthalate resin having an intrinsic viscosity of 1.4 (as determined in o-chlorophenol solution at 25°C) with a twin-screw extruder of 40 mm$\varnothing$ at a cylinder temperature of 240°C in amounts of blending shown in Table 1, and the mixture was pelletized.

The viscosity ($\eta_A$) of the polybutylene terephthalate resin as determined at a shear rate of 100 sec$^{-1}$ at 240°C and the viscosity ($\eta_B$) of the polyethylene resin as determined at a shear rate of 100 sec$^{-1}$ at 240°C were 15000 P and 12000 P, respectively, so that the viscosity ratio flA:RB was 1.25.

The kneaded resin was extruded with an inflation molding machine through a die having a diameter of 100 mm$\varnothing$ at a cylinder temperature of 220°C and a die temperature of 240°C to prepare an inflation film having a blow-up ratio of 2.9. Then, extrusion was conducted with a two-layer inflation film molding machine through a die having a diameter of 100 mm$\varnothing$ by making use of the kneaded resin as an external layer and a linear low-density polyethylene resin having a melt index of 0.5 as an internal layer at an internal layer extruder cylinder temperature of 220°C and a die temperature of 240°C to prepare a two-layer sheet having a blow-up ratio of 2.9 and a thickness of 150$\mu$m (internal layer/external layer = 50/50).

The data on Comparative Example 1 are physical properties of a simple inflation sheet comprising only a linear low-density polyethylene resin having a melt index of 0.5.

The physical properties of the bag were evaluated by the following measuring methods.

Resistance to Thermal Adhesion (Blocking Resistance):

This was measured according to JIS Z 1514

Heat-sealability:

A test piece of a width of 15 mm was heat sealed at a temperature of 80°C, a pressure of 1 kg/cm$^2$ and a time of 2 sec. Sealing strengths of 0 to 500 gf, 500 to 1000 gf, 1000 to 1500 gf and 1500 gf or more were evaluated as X, $\Delta$, O, and $\odot$, respectively.

Interlaminar bonding strength:

The bonding strength between the external layer and the internal layer was measured according to JIS 6854 and evaluated as follows:
$\odot$ : bonding strength was very high, and no peeling occurred.

4

O: bonding strength was high, and peeling hardly occurred.
Δ: bonding strength was low, and peeling easily occurred.
X: bonding strength was very low, and peeling readily occurred.

Melt Index:

This was measured at 190°C under a load of 2160g according to ASTM D1238.

Table 1

| | | Comp. Ex.1 | Comp. Ex.2 | Ex.1 | Ex.2 | Ex.3 | Ex.4 | Comp. Ex.3 | Comp. Ex.4 | Comp. Ex.5 | Ex.5 | Ex.6 | Ex.7 | Ex.8 | Comp. Ex.6 |
|---|---|---|---|---|---|---|---|---|---|---|---|---|---|---|---|
| PBT resin in external layer (wt%) | | 0 (single-layer) | 3 (single-layer) | 5 (single-layer) | 10 (single-layer) | 15 (single-layer) | 30 (single-layer) | 50 (single-layer) | 100 | 3 | 5 | 10 | 15 | 30 | 50 |
| film thickness ($\mu$m) | external layer | 150 | 150 | 150 | 150 | 150 | 150 | 150 | 150 | 75 | 75 | 75 | 75 | 75 | 75 |
| | internal layer | — | — | — | — | — | — | — | — | 75 | 75 | 75 | 75 | 75 | 75 |
| tensile strength (yield point) (kgf/cm$^2$) | TD | 108 | 107 | 110 | 110 | 88 | 61 | 33 | 450 | 103 | 103 | 107 | 103 | 108 | 109 |
| tensile strength (%) | TD | 500 or more | 300 | 200 | 150 | 80 | 15 | 3 | 400 | 500 or more | 500 or more | 500 or more | 500 or more | 500 or more | 500 or more |
| tear strength (kgf/cm) JIS Z 1702 | MD | 71 | 49 | 18 | 6 | 6 | 5 | 3 | 10 | 81 | 77 | 70 | 70 | 64 | 41 |
| | TD | 207 | 206 | 211 | 219 | 161 | 113 | 72 | 12 | 210 | 210 | 215 | 203 | 189 | 166 |
| interlaminar bonding strength | | — | — | — | — | — | — | — | — | ◎ | ◎ | ◎ | ◎ | ◎ | Δ |
| heat-sealability | | ◎ | ◎ | ◎ | ○ | ○ | Δ | × | × | ◎ | ◎ | ◎ | ◎ | ◎ | ◎ |
| blocking resistance (°C) | | 55 | 60 | 65 | 80 | 85 | 90 | 105 | 210 | 60 | 65 | 80 | 85 | 90 | 105 |

Note: MD: direction of flow during film formation

TD: direction perpendicular to MD

EP 0 370 820 A2

## Claims

1. A heavy-duty bag formed from a sheet comprising at least one layer of polymer material, characterized in that the sheet comprises an external layer formed from a polymer composition composed of a polyethylene resin and 5 to 30% by weight (based on the polymer composition) of a polybutylene terephalate resin having an intrinsic viscosity of 0.7 or more.

2. A heavy-duty bag according to claim 1, wherein the polyethylene resin of the said polymer composition has a melt index of 0.1 to 5.0.

3. A heavy-duty bag according to claim 1 or claim 2, wherein the polyethylene resin of the said polymer composition is linear low density polyethylene.

4. A heavy-duty bag according to any preceding claim, in which the polybutylene terephalate resin has an intrinsic viscosity of more than 1.0.

5. A heavy-duty bag according to any preceding claim, in which the polymer composition has a viscosity ratio of the polybutylene terephthalate resin to the polyethylene resin in a range represented by the following formula:

viscosity ratio $\eta_A/\eta_B$ = 0.15 to 2.5

wherein $\eta_A$: viscosity of polybutylene terephthalate resin as determined at a shear rate of 100 sec$^{-1}$ at 240°C,

$\eta_B$: viscosity of polyethylene resin as determined at a shear rate of 100 sec$^{-1}$ at 240°C.

6. A heavy-duty bag according to any preceding claim, in which the sheet comprises an internal layer of a polyolefin resin (having a melt index of 0.1 to 0.5) formed by co-extrusion inflation molding and laminating with the polymer composition forming the external layer.

7. A heavy-duty bag according to claim 6, wherein the polyethylene resin of the said polymer composition has a melt index of 0.1 to 15.

8. A heavy-duty bag according to claim 6 or claim 7, wherein the polyolefin forming the internal layer is polyethylene.

9. A heavy-duty bag according to any one of claims 6 to 8, in which the ratio of the thickness of the internal layer to the thickness of the external layer is 95:5 to 30:70.

10. A heavy-duty bag according to any preceding claim, in which the sheet has a total thickness of 50 to 500 μm.